(19) Europäisches Patentamt
European Patent Office
Office européen des brevets

(11) **EP 4 746 094 A1**

(12) **EUROPEAN PATENT APPLICATION**
published in accordance with Art. 153(4) EPC

(43) Date of publication:
**20.05.2026 Bulletin 2026/21**

(21) Application number: **25758558.8**

(22) Date of filing: **12.02.2025**

(51) International Patent Classification (IPC):
**H01M 10/04** (2006.01) **H01M 10/0565** (2010.01)

(52) Cooperative Patent Classification (CPC):
**H01M 10/04; H01M 10/0565;** Y02E 60/10;
Y02P 70/50

(86) International application number:
**PCT/KR2025/002082**

(87) International publication number:
**WO 2025/178312 (28.08.2025 Gazette 2025/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.02.2024 KR 20240024221
10.02.2025 KR 20250016760**

(71) Applicant: **LG Energy Solution, Ltd.
Seoul 07335 (KR)**

(72) Inventors:
• **KANG, Yonghee**
  **Daejeon 34122 (KR)**
• **KIM, Dong Kyu**
  **Daejeon 34122 (KR)**
• **RYU, Jihoon**
  **Daejeon 34122 (KR)**
• **JUN, Youngjin**
  **Daejeon 34122 (KR)**

(74) Representative: **BCKIP Part mbB
Landsberger Straße 98
80339 München (DE)**

(54) **PRESSING DEVICE**

(57)    The present invention may provide a pressing device including: a plurality of pad members in which a plurality of cell accommodation parts are each formed between two adjacent pad members, to press a plurality of battery cells comprising a curable electrolyte composition in a pressing direction (PD); and an elastic part comprising at least one elastic member arranged between the two adjacent pad members.

FIG. 1

EP 4 746 094 A1

## Description

## Cross-Reference to Related Applications

Cross-citation with related applications

This application was filed with the Korean Intellectual Property Office on February 20, 2024, and February 10, 2025, respectively, and this application claims the benefit of Korean Patent Application No. 10-2024-0024221, and Korean Patent Application No. 10-2025-0016760, in the Korean Intellectual Property Office, the disclosures of which are incorporated herein in their entireties by reference.

## Technical Field

The present disclosure relates to a pressure device that can press a battery cell.

## Background

Recently, demand for mobile devices such as smartphones, tablet personal computers (PCs), and wireless earphones is increasing. Further, as the development of electric vehicles, energy storage batteries, robots, and satellites begins in earnest, research on high-performance secondary batteries that can be repeatedly charged and discharged as an energy source is actively underway.

Currently commercialized secondary batteries include nickel-cadmium batteries, nickel-metal hydride batteries, nickel-zinc batteries, and lithium secondary batteries. Among these, the lithium secondary batteries have almost no memory effect compared to nickel-based secondary batteries, and thus the lithium secondary batteries have the advantages of free charging and discharging, a very low self-discharge rate, and a high energy density.

A battery cell, which is a functional unit of a battery, uses an electrolyte which is in a liquid state at ordinary temperature, and the electrolyte consists of a flammable material, causing the problem of being vulnerable to high temperature or fire. To resolve this, a high-polymer battery cell is ultimately developed which includes a high-polymer electrolyte which is in a solid state at ordinary temperature by means of injecting a curable electrolyte composition, which is in a liquid state at ordinary temperature, into an exterior material of a battery cell before curing the curable electrolyte composition.

A manufacturing process of a high-polymer battery cell may sequentially include an injecting operation of injecting a curable electrolyte composition into an exterior material of a battery cell, an aging operation, a pre-charging operation, a curing operation and a formation operation.

Here, in the pre-charging operation, the curing operation, and the formation operation, a process of installing and disassembling a jig in each operation is required in order to fix a battery cell, and time consumed therefor slows down the overall process speed, thereby causing the problem of reduced productivity.

## Technical Goals

Provided in the present disclosure is a pressure device which may perform several operations with a single device at once without installing and disassembling a jig in each operation during a manufacturing process of a high-polymer battery cell, so as to increase process speed and improve productivity. Provided in the present disclosure is a pressure device which may prevent applied pressure from being excessively applied in order to prevent the problem of a curable electrolyte composition unevenly curing, and prevent deterioration in the performance of a battery which occurs by a series of problems caused by uneven curing.

## Technical Solutions

According to an example aspect of the present disclosure, a pressure device may be to press a battery cell including a curable electrolyte composition. According to an example aspect of the present disclosure, a pressure device includes a plurality of pad members along which a plurality of cell receiving parts are formed between two pad members that are adjacent to each other in order to press a plurality of battery cells including a curable electrolyte composition in a pressurizing direction (PD), and an elastic part constituted with at least one elastic member provided between the adjacent two pad members.

According to an example aspect of the present disclosure, in the pressure device, all of the plurality of elastic parts corresponding to the plurality of pad members may form identical elastic modulus (k).

According to an example aspect of the present disclosure, in the pressure device, the elastic modulus (k) may be in a range of 300 N/mm to 1,500 N/mm.

According to an example aspect of the present disclosure, in the pressure device, a number, a length and elastic modulus (k) of the at least one elastic member constituting any one elastic part among the plurality of elastic parts are identical to a number, a length and elastic modulus of the at least one elastic member constituting any other elastic part among the plurality of elastic parts.

According to an example aspect of the present disclosure, in the pressure device, an applied pressure (P) is applied in the pressurizing direction (PD) that is a direction in which the plurality of pad members are stacked in order for elastic force by the elastic part to be applied to the plurality of pad members, wherein the plurality of elastic parts may be pressed with an identical pressure.

According to an example aspect of the present disclosure, in the pressure device, a space for each of the plurality of cell receiving parts is identical.

According to an example aspect of the present disclosure, in the pressure device, the curable electrolyte composition may harden upon heating.

According to an example aspect of the present disclosure, in the pressure device, before the curable electrolyte composition hardens, first applied pressure ($P_1$) is applied in order for elastic force by the elastic part to be applied to the plurality of pad members, and a pressurizing direction thickness (CL) of one battery cell accommodated in the one cell receiving part is identical to a pressurizing direction length (SL) of all elastic members constituting the elastic part.

According to an example aspect of the present disclosure, in the pressure device, after the curable electrolyte composition hardens, second applied pressure ($P_2$) is applied in order for elastic force by the elastic part to be applied to the plurality of pad members, wherein a pressurizing direction thickness (CL) of one battery cell accommodated in the one cell receiving part is identical to a pressurizing direction length (SL) of all elastic members constituting the elastic part.

According to an example aspect of the present disclosure, in the pressure device, R is greater than 1 according to Equation 1 below.

$$[\text{Equation } 1]$$

$$R = P_2/P_1$$

In the Equation 1, $P_1$ indicates first applied pressure that is applied in order for elastic force by the elastic part to be applied to the plurality of pad members before the curable electrolyte composition hardens, and $P_2$ indicates second applied pressure that is applied in order for elastic force by the elastic part to be applied to the plurality of pad members after the curable electrolyte composition hardens.

According to an example aspect of the present disclosure, in the pressure device, a pressurized state of the plurality of pad members to each of the plurality of battery cells is maintained as the first applied pressure ($P_1$) is changed to the second applied pressure ($P_2$).

According to an example aspect of the present disclosure, the pressure device may further include a guide bar configured to guide movement of the plurality of pad members, wherein a pad member to which applied pressure is applied among the plurality of pad members may slide along the guide bar to move.

According to an example aspect of the present disclosure, in the pressure device, the plurality of pad members may further include a plurality of holes provided in order for the guide bar to penetrate.

According to an example aspect of the present disclosure, in the pressure device, the guide bar is configured to penetrate the at least one elastic member.

According to an example aspect of the present disclosure, in the pressure device, each of the plurality of pad members may independently include a heat transfer material with a thermal conductivity of 10 watts per meter-kelvin (W/m·K) or greater.

### Advantageous Effects

According to the example aspects, it is possible to perform several operations with a single device at once without installing and disassembling a jig in each operation during a manufacturing process of a high-polymer battery cell, so as to increase process speed and improve productivity. According to the example aspects, it is possible to prevent applied pressure from being excessively applied in order to prevent the problem of a curable electrolyte composition unevenly curing, and prevent deterioration in the performance of a battery which occurs by a series of problems caused by uneven curing.

### Brief Description of Drawings

The drawings illustrated in the present disclosure are according to example aspects of the present disclosure, and the ratio of the width, the length and the thickness (or the height) of each configuration is for detailed descriptions for the present disclosure, and thus the ratio thereof may differ from reality. In addition, each axis in a coordinate system illustrated in the drawings may be perpendicular to another. An arrow may point in a + direction, and a direction exactly opposite to (i.e., a direction rotated through 180 degrees from) the direction pointed by the arrow may be a - direction.

FIG. 1 and FIG. 2 are plan views illustrating at least a portion of a pressure device according to an example aspect of the present disclosure (in a state in which applied pressure is applied).
FIG. 3 is a perspective view illustrating at least a portion of a pressure device according to an example aspect of the present disclosure (in a state in which applied pressure is not applied).
FIG. 4 is a perspective view illustrating at least a portion of a pressure device according to an example aspect of the present disclosure (in a state in which applied pressure is applied).

### Detailed Description

Prior to the detailed description of the present disclosure, terms or words used in the specification and claims may not be construed as limited to their common or dictionary meanings. Also, the terms and words may be construed as the meaning and concept consistent with the technical idea of the present disclosure under a principle that an inventor may appropriately define a concept of a term in order to describe their disclosure in the best way. The example aspects described in this specification and the configurations shown in the drawings are only the most preferred example aspects of the present disclosure, and do not necessarily represent the entire technical idea of the present disclosure. Accordingly, at the time of filing the present disclosure, there may be various equivalents and modifications that can replace them.

The same reference numerals or symbols shown in each drawing of the present specification may indicate parts or elements that perform substantially the same function. For ease of explanation and understanding, different example aspects may be described using the same reference numerals or symbols. That is, even though elements having the same reference numerals are shown in the plurality of drawings, the plurality of drawings may not all indicate one example aspect.

In the following descriptions, terms in a singular form include terms in a plural form unless an apparently and contextually conflicting description is present. It should be understood that terms such as "including" or "comprising" is to indicate that a feature, a number, an operation, an action, an element, a part, or a combination thereof described in the specification is present, and that the terms are not to exclude in advance a possibility that one or more other features, numbers, operations, actions, elements, parts, or combinations thereof may be present or added.

In addition, in the following descriptions, an expression such as an upper side, an upper part, a lower side, a lower part, a side surface, a front surface, or a rear surface is expressed based on directions shown in the drawings and the expression may be changed when a direction of a corresponding object is changed.

In addition, in the present disclosure and claims, terms including ordinal numbers such as "first" or "second" may be used to distinguish between elements. The ordinal number may be used to distinguish between identical or similar elements, and the meanings of the terms may not be construed as limited by use of the ordinal number. For example, elements combined with these ordinal numbers should not be construed as having a limited order of use or arrangement based on the number. If necessary, each ordinal number may be used interchangeably.

The term "ordinary temperature" used in the present specification is a temperature in a natural state which is not heated or cooled, and may indicate, for example, a temperature in a range from 10 °C to 30 °C, such as, a temperature which is approximately 15 °C or higher, approximately 18 °C or higher, approximately 20 °C or higher, approximately 23 °C or higher, approximately 27 °C or lower, or which is at 25 °C. The unit of the temperature used in the present specification is the degree Celsius (°C) unless otherwise defined. Additionally, in case that a measured temperature affects a physical characteristic among physical characteristics referred herein, the physical characteristic may be measured at 25 °C unless otherwise defined.

In the present disclosure, the term "battery" may be used interchangeably with "cell". In addition, the term "battery" or "cell" may be a generic term for a battery cell, which is a unit of the battery or cell, a battery module that includes the battery cell, or a battery pack.

A battery cell which is a term that is used in the present disclosure may be a concept of including a finished product (in other words, a product capable of generating electric energy) state capable of ultimately performing a functional unit of a battery and a half-finished product state having only an outer shape during a manufacturing process for manufacturing a finished product.

Provided in the present disclosure is a pressure device 10 which performs several operations with a single device at once without installing and disassembling a jig in each operation during a manufacturing process of a high-polymer battery cell, so as to increase process speed and improve productivity. Provided in the present disclosure is the pressure device 10 which may prevent applied pressure from being excessively applied in order to prevent the problem of a curable electrolyte composition unevenly curing, and prevent deterioration in the performance of a battery due to a series of problems caused by uneven curing.

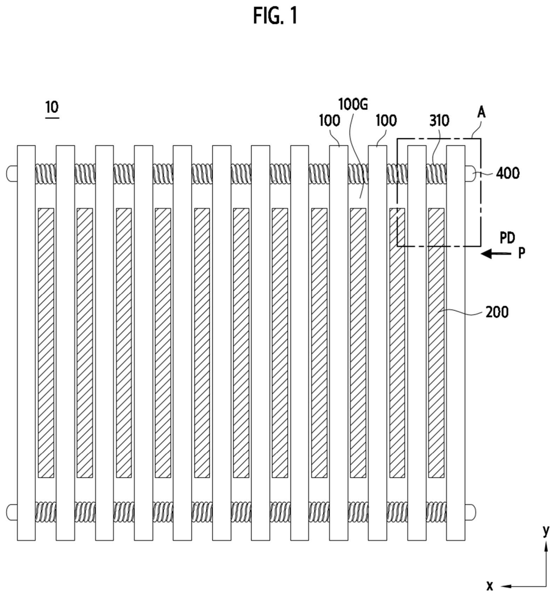

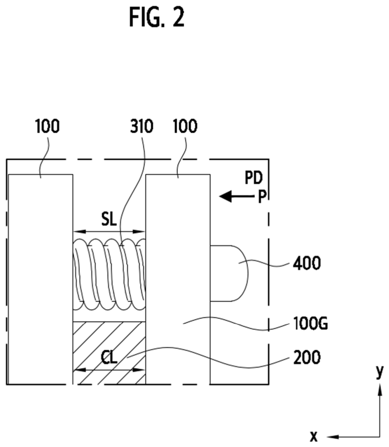

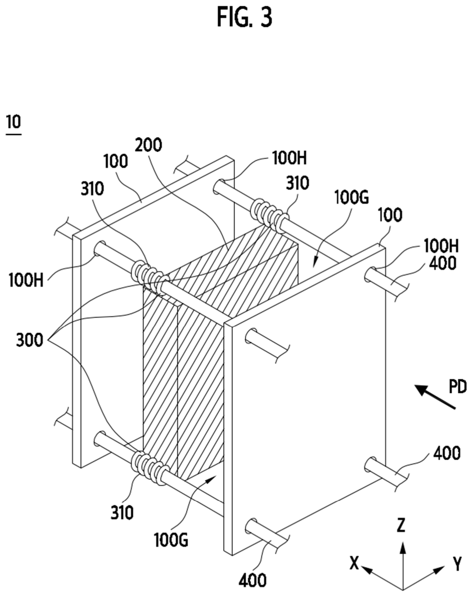

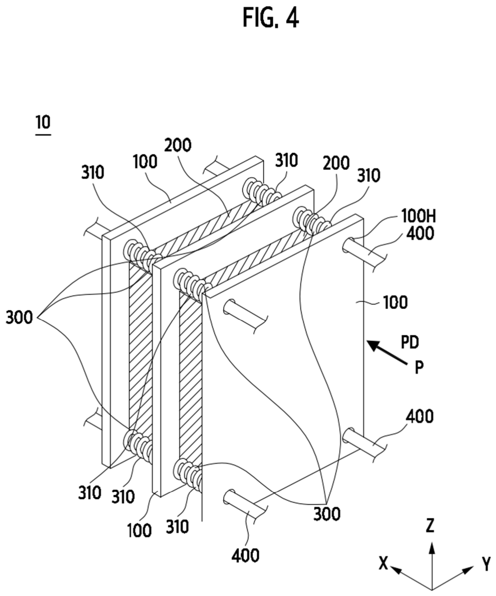

FIG. 1 and FIG. 2 are plan views illustrating at least a portion of the pressure device 10 according to an example aspect of the present disclosure (in a state in which applied pressure is applied). FIG. 3 is a perspective view illustrating at least a portion of the pressure device 10 according to an example aspect of the present disclosure (in a state in which applied pressure is not applied). FIG. 4 is a perspective view illustrating at least a portion of the pressure device 10 according to an example aspect of the present disclosure (in a state in which applied pressure is applied).

The pressure device 10 may press a battery cell 200. The battery cell 200 may include a curable electrolyte composition. The curable electrolyte composition may be in a liquid state at ordinary temperature. The curable electrolyte composition may harden upon heating. Alternatively, the curable electrolyte composition may harden by at least one of heating and pressing. The curable electrolyte composition may harden by gelling by means of a cross-linking or polymerization reaction under a curing condition.

The hardened curable electrolyte composition may be a gelled electrolyte, and the gelled electrolyte may perform a function of an electrolyte which moves at least one of an electron transfer material (lithium or sodium) and an electron at the battery cell 200.

The curable electrolyte composition may include an organic solvent and a polymer (for instance, a high-polymer or an oligomer). The curable electrolyte composition may include an organic solvent, electron transfer material salt, a polymer, and a cross-linking initiator.

The organic solvent included in the curable electrolyte composition may include at least one selected from a carbonate-based solvent, an ether-based solvent, and an ester-based solvent. The carbonate-based solvent may include at least one selected from a cyclic carbonate-based solvent and a linear carbonate-based solvent. The cyclic carbonate-based solvent may include at least one selected from ethylene carbonate (EC), propylene carbonate (PC), 1,2-buthylene carbonate (1,2-BC), 2,3-buthylene carbonate (2,3-BC), 1,2-pentylene carbonate (1,2-PTC), 2,3-pentylene carbonate (2,3-PTC), and vinylene carbonate (VC), for example. The linear carbonate-based solvent may include at least one selected from methyl carbonate, ethyl carbonate, dimethyl carbonate (DMC), diethyl carbonate (DEC), dipropyl carbonate (DPC), ethylmethyl carbonate (EMC), methylpropyl carbonate (MPC), and ethylpropyl carbonate (EPC), for example. The ether-based solvent may include at least one selected from dimethyl ether, diethyl ether, dipropyl ether, methylethyl ether, methylpropyl ether, and ethylpropyl ether. The ester-based solvent may include at least one selected from a linear ester-based solvent and a cyclic ester-based solvent. For example, a linear ester compound may include at least one selected from methyl acetate, ethyl acetate, propyl acetate, methyl propionate, ethyl propionate, propyl propionate, and butyl propionate. In addition, for example, a cyclic ester compound may include at least one selected from gamma-butyrolactone (γ-butyrolactone), gamma-valerolactone (γ-valerolactone), gamma-caprolactone (γ-caprolactone), sigma-valerolactone (σ-valerolactone), and epsilon-caprolactone (ε-caprolactone), for example.

The organic solvent of the curable electrolyte composition may include the cyclic carbonate-based solvent and the linear carbonate-based solvent. For example, the organic solvent may include EC and EMC. In the curable electrolyte composition, a volume of the linear carbonate-based solvent may be greater than a volume of the cyclic carbonate-based solvent, wherein a volume may be based on 25 °C.

The electron transfer material salt included in the curable electrolyte composition may be lithium salt or sodium salt, and an anion of the electron transfer material salt may include at least one selected from $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-(FSI^-)$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$. The electron transfer material salt may have concentration ranging from 0.1 molarity (M) to 2 M, 0.3 M to 1.5 M, or 0.5 M to 1.2 M considering adequate conductivity and viscosity at 25 °C for instance, although the same is not particularly limited.

The polymer included in the curable electrolyte composition may be cross-linked. The polymer may include at least one of a fluorin-based polymer, a (meta) acryl-based polymer, and a carbonate-based polymer, although the same is not particularly limited. The polymer may include at least one of the fluorin-based polymer and the carbonate-based polymer.

The fluorin-based polymer may include, for example, a polyvinylidene fluoride (PVDF)-based polymer including a vinylidene fluoride unit, and the PVDF-based polymer may include, for example, at least one selected from PVDF, polyvinylidene fluoride-co-hexafluoropropylene (PVDF-HFP), polyvinylidene fluoride-co-tetrafluoroethylene (PVDF-TFE), polyvinylidene fluoride-co-chlorotrifluoroethylene (PVDF-CTFE), and polyvinylidene fluoride-co-trifluoroproethylene (PVDFTrFE). An acryl-based polymer may derive from a monomer including a (meta)acrylate functional group at a terminal. The carbonate-based polymer may derive from a monomer including a carbonate functional group at a terminal.

The polymer may be included by 0.1 weight percent (wt%) to 50 wt%, 0.2 wt% to 45 wt%, 0.3 wt% to 40 wt%, 0.4 wt% to 35 wt%, 0.5 wt% to 30 wt%, 0.6 wt% to 25 wt%, 0.7 wt% to 20 wt%, 0.8 wt% to 15 wt%, or 0.9 wt% to 10 wt% of the total weight of the curable electrolyte composition 240 in consideration of viscosity and stability after curing.

The cross-linking initiator included in the curable electrolyte composition may include a thermal initiator such as azobisisobutyronitrile (AIBN) and a peroxide initiator such as benzoyl peroxide.

The curable electrolyte composition may include an additive if necessary.

The additive may include, for instance, a sulfate-based compound to minimize decomposition of the curable electrolyte composition. The sulfate-based compound may include at least one of methylene sulfate (MSA), ethylene sulfate (ESA), trimethylene sulfate (TMS), and methyl trimethylene sulfate (MTMS), for example.

The additive may include, for example, a phosphate-based compound to aid in the formation of a solid electrolyte interphase (SEI) film. The phosphate-based compound may include at least one of lithium difluoro (bisoxalato)phosphate, lithium difluoro phosphate, tetramethyltrimethyl silyl phosphate, trimethyl silyl phosphate, and tris (2,2,2-trifluoroethyl) phosphate, for example.

The additive, for example, may include a sultone-based compound to aid in the formation of the SEI film. The sultone-based compound may include at least one of 1,3-propane sultone (PS), 1,4-butane sultone, ethensultone, 1,3-propene sultone (PRS), 1,4-butene sultone, and 1-methyl-1,3-propene sultone, for example.

The additive may include, for example, a carbodiimide-based compound to minimize an effect from moisture. The carbodiimide-based compound may include, for example, dicyclohexylmethanediimine (DCC).

The battery cell 200 may include a curable electrolyte composition and an electrode assembly built in an exterior material. The electrode assembly may include a positive electrode and a negative electrode, and may further include a separator if necessary. The positive electrode of the electrode assembly may be electrically connected to a positive electrode tap protruding by extending from the exterior material, and the negative electrode of the electrode assembly may be electrically connected to a negative electrode tap protruding by extending from the exterior material.

The pressure device 10 may heat the battery cell 200 if necessary, and include a heat source for heating. The heat source may be disposed at a pad member 100 which is to be described hereinafter.

The plurality of pad members 100 may individually include a heat transfer material with thermal conductivity of 10 W/m·K or greater to more evenly deliver heat to the battery cell 200 and minimize deformation of an outer shape. Here, the heat transfer material may be solid at ordinary temperature, and the thermal conductivity may be measured based on ISO 22007-2, for example. The heat transfer material may include a metal material including aluminum (Al), for instance. In another example, the heat transfer material may have thermal conductivity of, for instance, 20 W/m·K or greater, 30 W/m·K or greater, 40 W/m·K or greater, 50 W/m·K or greater, 60 W/m·K or greater, 70 W/m·K or greater, 80 W/m·K or greater, 90 W/m·K or greater, 100 W/m·K or greater, 110 W/m·K or greater, 120 W/m·K or greater, 130 W/m·K or greater, 140 W/m·K or greater, or 150 W/m·K or greater. The upper limit of the thermal conductivity of the heat transfer material may be, for instance, 500 W/m·K or less, 450 W/m·K or less, 400 W/m·K or less, 350 W/m·K or less, 300 W/m·K or less, or 250 W/m·K or less, although not particularly limited.

The pressure device 10 may increase a temperature of the battery cell 200 from ordinary temperature to a predetermined temperature. A process of increasing a temperature to a temperature higher than ordinary temperature and/or a process of maintaining the increased temperature may be referred to as heating. The predetermined temperature may be a temperature for curing the curable electrolyte composition included in the battery cell 200 or a temperature adequate for activation.

The curable electrolyte composition may be injected into the exterior material in which a portion other than an inlet is sealed and the electrode assembly is built (the injection operation). After this, after maintaining ordinary temperature for a predetermined period of time (the aging operation), pre-charge may be performed (the pre-charging operation). After this, the curing operation may be performed.

The curable electrolyte composition may harden through the curing operation. As the curable electrolyte composition hardens through the curing operation, the inside of the exterior material of the battery cell 200 may be filled with the gelled electrolyte. The curing operation may be performed as the curable electrolyte composition is heated. Here, a predetermined temperature may be a temperature at which the curable electrolyte composition may be gelled after a cross-linking or polymerization reaction is initiated by heat while side reactions may be minimized. For instance, the predetermined temperature in the curing operation may be around 40 °C to 80 °C or 50 °C to 65 °C. During the process, the pressure device 10 may heat the battery cell 200.

The formation operation may be performed with respect to the battery cell 200 filled with the gelled electrolyte which is the curable electrolyte composition hardened in the exterior material through the curing operation. The battery cell 200 filled with the gelled electrolyte in the formation operation may be imparted with an electric feature to be activated. The formation operation may include a stabilizing process after activation, inspecting, and evaluating. In the formation operation, in order to remove gas generated in the activating process, or for another reason, the battery cell 200 filled with the gelled electrolyte may be pressed. To achieve this purpose, applied pressure required in the formation operation is required to be sufficiently high, which may signify to be higher than applied pressure in the curing operation.

In other words, the applied pressures required by the formation operation and the curing operation respectively are different from each other, and the pressure device 10 of the present disclosure is to convert from the curing operation to the formation operation without an additional process of installing and disassembling a jig.

Meanwhile, in the formation operation, pressing and heating may be simultaneously performed for a faster activation, and the pressure device 10 may apply applied pressure while heating the battery cell 200 during the process.

The pressure device 10 includes the plurality of pad members 100 along which a plurality of cell receiving parts 100G are formed between two pad members 100 that are adjacent to each other in order to press the plurality of battery cells 200 including a curable electrolyte composition in the pressurizing direction (PD).

The cell receiving part 100G may be a space which is formed between the adjacent two pad members 100 which are arranged in parallel at a predetermined interval. One battery cell 200 of the plurality of battery cells 200 may be accommodated in the cell receiving part 100G.

As for the plurality of pad members 100, the pad members 100 are individually arranged and stacked in parallel with a predetermined interval, between which the cell receiving parts 100G are formed, and one battery cell 200 may be accommodated in each cell receiving part 100G which is formed (refer to FIG. 1 and FIG. 3).

The plurality of pad members 100 may be arranged and stacked in parallel in the pressurizing direction (PD). Because the plurality of pad members 100 are arranged and stacked in parallel in the pressurizing direction (PD), it is advantageous to apply an identical pressure to the battery cell 200 which is individually accommodated in the plurality of cell receiving parts 100G by the applied pressure (P) applied in the pressurizing direction (PD). When pressures different from each other are applied to the battery cells 200 which are respectively accommodated in the plurality of cell receiving parts 100G, problems may arise in that curing may be unevenly performed by a unit of the battery cell 200 in the curing operation, and that, in the formation operation, a degree of activation differs by the unit of the battery cell 200, thereby causing difficulties in manufacturing a product of the battery cell 200 with a uniform quality. In other words, when an identical pressure is applied to the battery cell 200 individually accommodated in the plurality of cell receiving parts 100G, the problem may be prevented, thereby being advantageous in manufacturing a product of the battery cell 200 with a uniform product quality.

At the plurality of pad members 100 before pressing, an interval between the adjacent two pad members 100 may be greater than a pressurizing direction thickness (CL) of the battery cell 200. In other words, because a width in the pressurizing direction (PD) of the cell receiving part 100G is greater than the pressurizing direction thickness (CL) of the battery cell 200, the battery cell 200 may be easily accommodated in the cell receiving part 100G.

The pressure device 10 may include an elastic part 300 composed of at least one elastic member 310 disposed between the adjacent two pad members 100. The elastic part 300 may be composed of the plurality of elastic members 310 for structural stability upon pressing. For instance, the elastic part 300 may be composed of the elastic member 310 disposed at each corner portion of the pad member 100 (refer to FIG. 3 and FIG. 4).

The pressure device 10 may include the plurality of elastic parts 300 corresponding to the plurality of pad members 100. In order to further improve structure stability upon pressing, all of the plurality of elastic parts 300 may be individually composed of the elastic member 310 of an identical number and an identical length. The elastic member 310 may be a spring, for example.

The plurality of elastic parts 300 according to the plurality of pad members 100 may all have identical elastic modulus (k). For instance, the elastic modulus (k) may be 300 N/mm or greater, 310 N/mm or greater, 320 N/mm or greater, 330 N/mm or greater, 340 N/mm or greater, 350 N/mm or greater, 360 N/mm or greater, 370 N/mm or greater, 380 N/mm or greater, 390 N/mm or greater, or 400 N/mm or greater, or 1,500 N/mm or less, 1,400 N/mm or less, 1,300 N/mm or less, 1,200 N/mm or less, 1,100 N/mm or less, 1,000 N/mm or less, 950 N/mm or less, 900 N/mm or less, 850 N/mm or less, 800 N/mm or less, 750 N/mm or less, 700 N/mm or less, 650 N/mm or less, or 600 N/mm or less. The elastic modulus (k) may be within a range formed by selecting the above-described upper limits and lower limits, which may be a range considering all of two aspects of sufficient applied pressure and minimization of slipping of a curable electrolyte composition by pressing. As a specific example, the elastic modulus (k) may be 400 N/mm or greater and 600 N/mm or less. With all of the plurality of elastic parts 300 having the identical elastic modulus (k), because the applied pressure (P) applied in the pressurizing direction (PD) is identical when the battery cells 200 of an identical thickness are placed at each of the plurality of cell receiving parts 100G, in case the battery cells 200 of the identical thickness are accommodated in each of the plurality of cell receiving parts 100G, it is advantageous to apply an identical pressure to each battery cell 200.

Because the elastic modulus (k) of the elastic part 300 is determined by the elastic modulus (k) of at least one elastic member 310 constituting the elastic part 300, it is desirable that a number, a length and elastic modulus (k) of the elastic member 310 constituting each elastic part 300 in the plurality of elastic parts 300 are all identical. In other words, a number, a length and elastic modulus (k) of at least one elastic member 310 constituting any one elastic part 300 of the plurality of elastic parts 300 may be identical to a number, a length, and elastic modulus (k) of at least one elastic member 310 constituting any other elastic part 300 among the plurality of elastic parts 300.

In the present disclosure, an identical length of the elastic member 310 may signify to be substantially identical. For instance, based on a length of any one elastic member 310, a ratio of a length difference between any one elastic member 310 and any other elastic member 310 may be 5 % or less.

In the present disclosure, identical elastic modulus (k) of the elastic member 310 may signify to be substantially identical. For instance, based on elastic modulus (k) of any one elastic member 310, a ratio of an elastic modulus (k) difference between any one elastic member 310 and any other elastic member 310 may be 5 % or less.

When the applied pressure (P) is applied to the plurality of pad members 100 in the pressurizing direction (PD) that is a direction in which the plurality of pad members 100 are stacked, the plurality of elastic parts 300 may be pressed with an identical pressure in order for elastic force by the elastic part 300 to be applied, which in turn signifies that an identical pressure may be applied to the battery cell 200 which is individually accommodated in the plurality of cell receiving parts 100G.

In case that all of the elastic members 310 constituting the elastic part 300 are identical when the applied pressure (P) is applied in the pressurizing direction (PD), each interval of the cell receiving parts 100G may be maintained to be identical, wherein, when a thickness of the battery cell 200 individually accommodated in the plurality of cell receiving parts 100G is identical, an identical pressure may be applied to each battery cell 200.

In a manufacturing process of a high-polymer battery cell, an operation of curing a curable electrolyte composition was essential, and, since temperature and applied pressure which are different from a formation operation were required in this operation, jigs used in the curing operation and in the formation operation were different in prior art. Therefore, a jig used in the curing operation was installed, and curing was performed before the jig was disassembled, and then a jig used in the formation operation was installed, and activation was performed before the jig was disassembled in order to manufacture a product of the battery cell 200; whereas, the pressure device 10 of the present disclosure may respond to applied pressure required by each of the curing operation and the formation operation only by means of adjustment of the applied pressure (P) applied in the pressurizing direction (PD), in order to omit a considerable portion of an installation and disassembly process of a jig.

In particular, because the applied pressure (P) applied to one side pad member 100 is serially delivered to the adjacent pad member 100 by the elastic part 300, only the applied pressure (P) of the pad member 100 located at both end portions of the plurality of pad members 100 may be adjusted, in order for the entire applied pressure (P) to be adjusted. This may signify that each interval of the pad member 100 is not required to be individually adjusted in order to provide the even applied pressure (P) to each battery cell 200, and may signify that only tensile force for splaying the plurality of pad members 100 is required to be applied when the battery cell 200 is mounted on the pressure device 10 or removed from the pressure device 10.

The pressure device 10 may be used whenever the battery cell 200 is pressed during the manufacturing process of the high-polymer battery cell, and the pressure device 10 may be used in the pre-charging operation, the curing operation, and the formation operation. Furthermore, in the case that the plurality of battery cells 200 are required to be aligned to perform the identical process even when applied pressure is not applied to the battery cells 200, the pressure device 10 may be used in that case. Therefore, the pressure device 10 may be continuously used in the pre-charging operation, the curing operation, and the formation operation which are sequentially performed, and may perform installation in the pre-charging operation before performing disassembly in the formation operation to increase process speed and improve productivity.

In case that a method of prior art is performed, when time required by an installation and disassembly process of a jig in each operation is compared to time required while the pressure device 10 is used, when the pressure device 10 is used, approximately 36% of time may be reduced (based on 100 medium- and large-sized pouch type battery cells). Furthermore, although a jig was installed and disassembled by three times or more in total according to a method of prior art, the pressure device 10 of the present disclosure installs and disassembles only once, thereby improving convenience.

First applied pressure ($P_1$) may be applied in order for elastic force by the elastic part 300 to be applied to the plurality of pad members 100 before the curable electrolyte composition hardens. Here, the pressurizing direction thickness (CL) of one battery cell 200 accommodated in one cell receiving part 100G may be identical to a pressurizing direction length (SL) of all of the elastic members 310 constituting the elastic part 300. For instance, the first applied pressure ($P_1$) may be 300 kilograms-force (kgf) or less, 290 kgf or less, 280 kgf or less, 270 kgf or less, 260 kgf or less, 250 kgf or less, 240 kgf or less, 230 kgf or less, 220 kgf or less, 210 kgf or less, or 200 kgf or less. A lower limit of the first applied pressure ($P_1$) is not limited in particular, but may be more than 0 kgf, and the first applied pressure ($P_1$) may be in a range formed by selecting the above-described upper limits and lower limit. In other words, the plurality of pad members 100 may press the battery cell 200 by the first applied pressure ($P_1$), and press the elastic part 300 at the same time, in order for elastic force by the elastic part 300 to be applied to the pad member 100, thereby preventing applied pressure from being excessively applied to the battery cell 200. Therefore, the pressure device 10 may prevent the problem that the curable electrolyte composition unevenly hardens, and thus may prevent deterioration in the performance of a battery which is caused by uneven curing of the curable electrolyte composition.

Before the curable electrolyte composition hardens signifies before the curable electrolyte composition reaches a desired curing modulus. In the present disclosure, curing modulus is a ratio (weight ratio) of a content of the hardened curable electrolyte composition to a content of the curable electrolyte composition before curing shown in a percentage, and, although the same is not limited in particular, the same may be measured based on a ratio of multiple combinations by means of Fourier-transform infrared spectroscopy (FT-IR) or may be measured by means of a cell scanning method. In other words, before the curable electrolyte composition hardens may signify the curing operation in other words.

The pressure device 10 may set the first applied pressure ($P_1$) applied in the curing operation at a degree of forming an outer shape of the battery cell 200 or at a degree of pressing to fix the same. When the pad member 100 begins to apply pressure to the battery cell 200, the elastic part 300 may simultaneously apply elastic force thereby to the pad member 100.

Second applied pressure ($P_2$) may be applied in order for elastic force by the elastic part 300 to be applied to the plurality of pad members 100 after the curable electrolyte composition hardens. Here, the pressurizing direction thickness (CL) of one battery cell 200 accommodated in one cell receiving part 100G may be identical to the pressurizing direction length (SL) of all of the elastic members 310 constituting the elastic part 300. For instance, the second applied pressure ($P_2$) may be 300 kgf or less, 290 kgf or less, 280 kgf or less, 270 kgf or less, 260 kgf or less, 250 kgf or less, 240 kgf or less, 230 kgf or less, 220 kgf or less, 210 kgf or less, or 200 kgf or less. A lower limit of the second applied pressure ($P_2$) is not limited in particular, but may be more than 0 kgf, and the second applied pressure ($P_2$) may be in a range formed by selecting the above-described upper limits and lower limit. In other words, the plurality of pad members 100 may press the battery cell 200 by the second applied pressure ($P_2$), and press the elastic part 300 at the same time, in order for elastic force by the elastic part 300 to be applied to the pad member 100, thereby preventing applied pressure from being excessively applied to the battery cell 200. Therefore, the pressure device 10 may prevent the problem that the curable electrolyte composition unevenly hardens, and thus may prevent deterioration in the performance of a battery which occurs by a series of problems caused by uneven hardening of the curable electrolyte composition.

After the curable electrolyte composition hardens signifies after the curable electrolyte composition reaches a desired curing modulus. In other words, after the curable electrolyte composition hardens may signify the formation operation.

In the pressure device 10, R according to the following Equation 1 may be more than 1, 1.1 or greater, 1.2 or greater, 1.3 or greater, 1.4 or greater, 1.5 or greater, 1.6 or greater, 1.7 or greater, 1.8 or greater, 1.9 or greater, or 2 or greater. Furthermore, although not limited in particular, R according to the following Equation 1 may be 5 or less, 4.9 or less, 4.8 or less, 4.7 or less, 4.6 or less, 4.5 or less, 4.4 or less, 4.3 or less, 4.2 or less, 4.1 or less, or 4 or less. Further, R according to the following Equation 1 may be within a range formed by selecting the above-described upper limits and lower limits. In other words, the pressure device 10 may set in order for the applied pressure (in other words, the second applied pressure) in the formation operation to be higher than the applied pressure (in other words, the first applied pressure) in the curing operation within the range. Because the elastic part 300 performs a role of a buffer against applied pressure, the pressure device 10 may apply the second applied pressure ($P_2$) which is a relatively high applied pressure while applying the first applied pressure ($P_1$) to the battery cell 200, thereby performing multiple operations with a single device at once to increase process speed and improve productivity.

$$[\text{Equation 1}]$$

$$R = P_2/P_1$$

In Equation 1, $P_1$ indicates the first applied pressure ($P_1$) applied in order for elastic force by the elastic part 300 to be applied to the plurality of pad members 100 before the curable electrolyte composition hardens, and $P_2$ indicates the second applied pressure ($P_2$) applied in order for elastic force by the elastic part 300 to be applied to the plurality of pad members 100 after the curable electrolyte composition hardens.

As the first applied pressure ($P_1$) is changed to the second applied pressure ($P_2$), a pressurized state of the plurality of pad members 100 with respect to each of the plurality of battery cells 200 may be maintained. In other words, the pressure device 10 may be continuously used in the curing operation and the formation operation at least without installing and disassembling in each operation, in order to increase process speed and improve productivity.

The pressure device 10 may include a guide bar 400 which guides movement of the plurality of pad members 100. The pad member 100 to which the applied pressure (P) is applied among the plurality of pad members 100 may slide along the guide bar 400 to move (refer to FIG. 3 and FIG. 4).

The plurality of pad members 100 may further include a plurality of holes 100H provided in order for the guide bar 400 to penetrate. The guide bar 400 may penetrate the plurality of holes 100H provided at each pad member 100 at the plurality of pad members 100.

The guide bar 400 may penetrate at least one elastic member 310. The guide bar 400 may penetrate one hole 100H provided at one pad member 100, may penetrate the elastic member 310 that is at a corresponding location, and may penetrate one hole 100H which is provided at another pad member 100 and is at a corresponding location.

Therefore, in the pressure device 10, the elastic part 300 may be implemented to perform a role of a buffer against applied pressure, and, as the plurality of pad members 100 are provided to be movable on the guide bar 400, each pad member 100 may be moved to receive an identical pressure when the predetermined applied pressure (P) is applied at one side (or both sides) of the pressure device 10.

The pressure device 10 according to an example aspect of the present disclosure may be widely applied to an electric vehicle, a battery charging station and other green technology fields such as solar photovoltaic power generation and wind power generation that use a battery. Also, the pressure device 10 according to an example aspect of the present disclosure may be applied to an eco-friendly electric vehicle, a hybrid vehicle, or the like that suppresses air pollution and greenhouse gas emission to prevent climate change.

While various example aspects of the present disclosure are described in detail above, the scope of the present disclosure is not limited thereto, and it will be apparent to those of ordinary skill in the art that various modifications and variations may be made without departing from the technical idea of the present disclosure as defined by the appended claims. In addition, the aforementioned example aspects may be implemented with some elements removed, and each example aspect may be implemented in combination with each other.

[Description of Symbols]

| 10 | Pressure device |
| 100 | Pad member |

| | |
|---|---|
| 100G | Cell receiving part |
| 100H | Hole |
| 200 | Battery cell |
| 300 | Elastic part |
| 310 | Elastic member |
| 400 | Guide bar |

**Claims**

1. A pressure device comprising:

   a plurality of pad members along which a plurality of cell receiving parts are formed between two pad members that are adjacent to each other in order to press a plurality of battery cells comprising a curable electrolyte composition in a pressurizing direction (PD); and
   an elastic part constituted with at least one elastic member provided between the adjacent two pad members.

2. The pressure device of claim 1,
   wherein all of the plurality of elastic parts corresponding to the plurality of pad members form identical elastic modulus (k).

3. The pressure device of claim 2,
   wherein the elastic modulus (k) ranges from 300 N/mm to 1,500 N/mm.

4. The pressure device of claim 2,
   wherein a number, a length and elastic modulus (k) of the at least one elastic member constituting any one elastic part among the plurality of elastic parts are identical to a number, a length and elastic modulus of the at least one elastic member constituting any other elastic part among the plurality of elastic parts.

5. The pressure device of claim 2,

   wherein an applied pressure (P) is applied in the pressurizing direction (PD) that is a direction in which the plurality of pad members are stacked in order for elastic force by the elastic part to be applied to the plurality of pad members, and
   wherein the plurality of elastic parts are pressed with an identical pressure.

6. The pressure device of claim 5,
   wherein a space for each of the plurality of cell receiving parts is identical.

7. The pressure device of claim 1,
   wherein the curable electrolyte composition is configured to cure upon heating.

8. The pressure device of claim 7,

   wherein, before the curable electrolyte composition hardens, first applied pressure ($P_1$) is applied in order for elastic force by the elastic part to be applied to the plurality of pad members, and
   wherein a pressurizing direction thickness (CL) of one battery cell accommodated in the one cell receiving part is identical to a pressurizing direction length (SL) of all elastic members constituting the elastic part.

9. The pressure device of claim 7,

   wherein, after the curable electrolyte composition hardens, second applied pressure ($P_2$) is applied in order for elastic force by the elastic part to be applied to the plurality of pad members, and
   wherein a pressurizing direction thickness (CL) of one battery cell accommodated in the one cell receiving part is identical to a pressurizing direction length (SL) of all elastic members constituting the elastic part.

10. The pressure device of claim 7,

    Wherein R is greater than 1 according to Equation 1 below:

    $$[\text{Equation } 1]$$
    $$R = P_2/P_1$$

    wherein, in the Equation 1, $P_1$ indicates first applied pressure that is applied in order for elastic force by the elastic part to be applied to the plurality of pad members before the curable electrolyte composition hardens, and $P_2$ indicates second applied pressure that is applied in order for elastic force by the elastic part to be applied to the plurality of pad members after the curable electrolyte composition hardens.

11. The pressure device of claim 10, wherein, as the first applied pressure is changed to the second applied pressure, a pressurized state of the plurality of pad members to each of the plurality of battery cells is maintained.

12. The pressure device of claim 1,
    further comprising a guide bar configured to guide movement of the plurality of pad members, wherein a pad member of the plurality of pad members to which pressure is applied is configured to slide along the guide bar so as to move.

13. The pressure device of claim 12,
    wherein the plurality of pad members further comprise a plurality of holes provided in order for the guide bar to penetrate.

**14.** The pressure device of claim 12, wherein the guide bar is configured to penetrate the at least one elastic member.

**15.** The pressure device of claim 1, wherein each of the plurality of pad members comprises a heat transfer material having a thermal conductivity of 10 W/m·K or greater.

# FIG. 1

# FIG. 2

FIG. 3

# FIG. 4

## INTERNATIONAL SEARCH REPORT

| International application No. |
| --- |
| **PCT/KR2025/002082** |

**A. CLASSIFICATION OF SUBJECT MATTER**

**H01M 10/04**(2006.01)i; **H01M 10/0565**(2010.01)i

According to International Patent Classification (IPC) or to both national classification and IPC

**B. FIELDS SEARCHED**

Minimum documentation searched (classification system followed by classification symbols)

H01M 10/04(2006.01); H01M 10/052(2010.01); H01M 10/0585(2010.01); H01M 10/42(2006.01); H01M 50/211(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 셀(cell), 고분자(polymer), 가압(pressurization), 탄성부(elastic part)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2016-0129031 A (NISSAN MOTOR CO., LTD.) 08 November 2016 (2016-11-08)<br>See paragraphs [0023]-[0058] and figures 14-17. | 1-15 |
| Y | KR 10-2372463 B1 (ENERGYN INC.) 10 March 2022 (2022-03-10)<br>See paragraphs [0062]-[0064] and [0102], claims 1-9 and figure 5. | 1-15 |
| A | KR 10-2022-0163585 A (LG ENERGY SOLUTION, LTD.) 12 December 2022 (2022-12-12)<br>See claims 1-16 and figure 8. | 1-15 |
| A | KR 10-2021-0138883 A (LG ENERGY SOLUTION, LTD.) 22 November 2021 (2021-11-22)<br>See claims 1-14 and figure 2. | 1-15 |
| A | CN 211182385 U (ZHEJIANG YIKA NEW ENERGY AUTOMOBILE CO., LTD.) 04 August 2020 (2020-08-04)<br>See claims 1-8 and figures 1-2. | 1-15 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 May 2025** | **14 May 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/002082**

| Patent document cited in search report | | | Publication date (day/month/year) | Patent family member(s) | | | Publication date (day/month/year) |
|---|---|---|---|---|---|---|---|
| KR | 10-2016-0129031 | A | 08 November 2016 | CN | 106133944 | A | 16 November 2016 |
| | | | | CN | 106133944 | B | 26 November 2019 |
| | | | | EP | 3121868 | A1 | 25 January 2017 |
| | | | | EP | 3121868 | A4 | 12 April 2017 |
| | | | | EP | 3121868 | B1 | 06 November 2019 |
| | | | | EP | 3121868 | B8 | 11 December 2019 |
| | | | | JP | 6115683 | B2 | 19 April 2017 |
| | | | | KR | 10-1962526 | B1 | 26 March 2019 |
| | | | | US | 10193181 | B2 | 29 January 2019 |
| | | | | US | 2017-0133705 | A1 | 11 May 2017 |
| | | | | WO | 2015-141631 | A1 | 24 September 2015 |
| KR | 10-2372463 | B1 | 10 March 2022 | None | | | |
| KR | 10-2022-0163585 | A | 12 December 2022 | None | | | |
| KR | 10-2021-0138883 | A | 22 November 2021 | None | | | |
| CN | 211182385 | U | 04 August 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240024221

- KR 1020250016760